# EUROPÄISCHE PATENTSCHRIFT

(11) **EP 2 191 107 B1**
(45) Veröffentlichungstag und Bekanntmachung des Hinweises auf die Patenterteilung: **16.07.2014**
(21) Anmeldenummer: 09777607.4
(22) Anmeldetag: 03.08.2009
(51) Int. Cl.: H01F 7/16, B23F 1/02, H01F 7/122, H01F 7/126, F01L 13/00

(54) **ELEKTROMAGNETISCHE STELLVORRICHTUNG**
ELECTROMAGNETIC ACTUATING APPARATUS
DISPOSITIF DE RÉGLAGE ÉLECTROMAGNÉTIQUE

(30) Priorität: 01.08.2008 DE 202008010301 U
(43) Veröffentlichungstag der Anmeldung: 02.06.2010
(73) Patentinhaber: ETO MAGNETIC GMBH, 78333 Stockach (DE)
(72) Erfinder: GOLZ, Thomas, 78354 Sipplingen (DE); SCHIEPP, Thomas, 78606 Seitingen-Oberflacht (DE)
(74) Vertreter: Behrmann, Niels
(86) Internationale Anmeldenummer: PCT/EP2009/005599
(87) Internationale Veröffentlichungsnummer: WO 2010/012498

(56) Entgegenhaltungen:
- WO-A-2008/155119
- DE-A1- 10 240 774
- DE-U1- 20 114 466

## Beschreibung

Die vorliegende Erfindung betrifft die Verwendung einer elektromagnetischen Stellvorrichtung nach Anspruch 1. Eine derartige Vorrichtung ist aus der DE 102 40 774 der Anmelderin bekannt und wird für vielfältige Stellaufgaben, etwa im Zusammenhang mit Verbrennungsmotoren, eingesetzt.

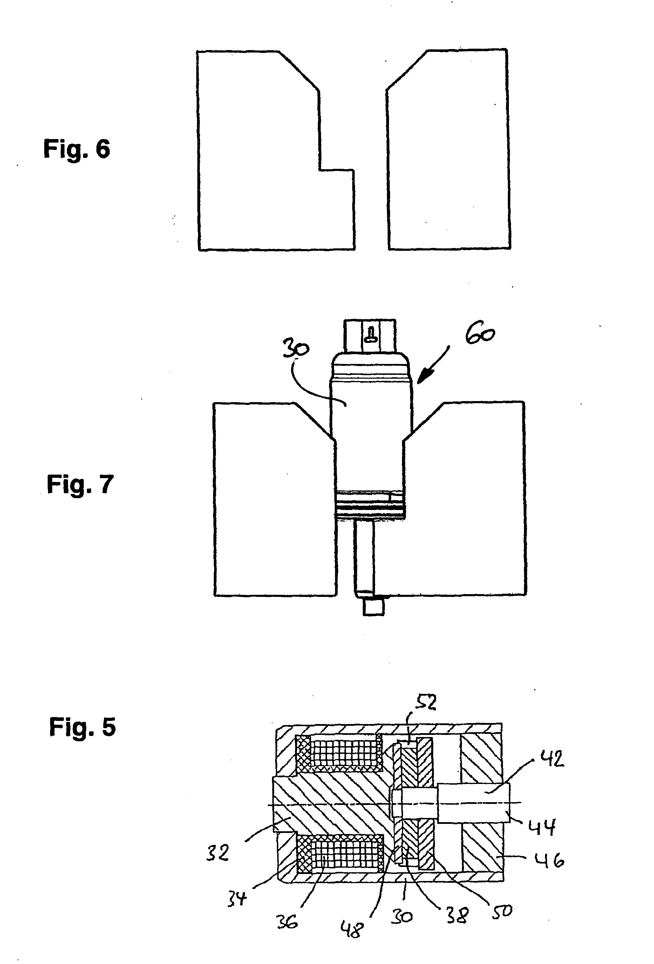

Die Fig. 5 zum Stand der Technik verdeutlicht die konstruktive Realisierung einer als bekannt vorausgesetzten elektromagnetischen Stellvorrichtung. In einem zylindrischen Gehäuse 30 ist eine stationäre Kerneinheit 32 vorgesehen, wobei sich radial zwischen diesen ein Spulenträger 34 mit einer darauf vorgesehenen Wicklung 36 befindet. Axial beweglich relativ zur Kerneinheit 32 geführt ist eine Ankereinheit, welche eine langgestreckte Stößeleinheit 42 aufweist, die endseitig ein Eingriffsende 44 ausbildet. Dem Eingriffsende 44 gegenüberliegend und zum magnetischen Zusammenwirken mit der Kerneinheit weist die Ankereinheit eine mehrfachscheibenförmige Anordnung bestehend aus einer Permanentmagnetscheibe 38 sowie, dieser beidseits benachbart, einer ersten bzw. zweiten Ankerscheibe 48, 50 auf. Mantelseitig umschlossen ist diese Anordnung von einem Einfassring 52.

In der gezeigten Position der Fig. 5 haftet die Ankereinheit durch Wirkung des Permanentmagneten 38 am Kern 32. Eine Bestromung der Wicklung 36 erzeugt dann ein abstoßendes Feld, wodurch die Ankereinheit (in der Figurenebene nach rechts) axial bewegt wird und entsprechend ein Stellpartner, endseitig an das Eingriffsende 44 angreifend, angetrieben werden kann.

Eine derartige, schematisch beschriebene Vorrichtung ist in verschiedenen Ausführungen bekannt und wird für vielfältige Anwendungen, etwa auch zur Nockenwellenverstellung an einem Verbrennungsmotor, benutzt. Dabei ermöglicht die einfache Fertigbarkeit eine hohe Großserientauglichkeit, so dass bereits die aus dem Stand der Technik bekannte Technologie günstige Stückkosten realisieren kann.

Gleichzeitig erweist sich die gemäß Fig. 5 illustrierte Technologie jedoch auch als unflexibel, insbesondere im Hinblick auf besondere Bauraumerfordernisse. So ist es nämlich, wie die Fig. 5 verdeutlicht, konstruktives Prinzip der bekannten Technologie, die Stößeleinheit 42 als Teil der Ankereinheit und damit starr an dem Scheibenpaket 48, 38, 50 anzuordnen; diese Einheiten sind nicht trennbar und erzwingen daher für einen effizienten Einbau eine möglichst entsprechend radialsymmetrische Einbaukontur. Die Fig. 6 als schematische Einbaukontur an einem Verbrennungsmotor (konkret: der Einbauraum für einen elektromagnetischen Aktor zur Nockenwellenverstellung) verdeutlicht dagegen exemplarisch die realen Platzverhältnisse an einem Einsatzort; das lediglich symbolisch in die Fig. 7 eingezeichnete Aggregat verdeutlicht, dass eine traditionelle radialsymmetrische Anordnung entsprechend der Fig. 5 (insoweit zeigt die Einheit 60 einen montagefähigen Aktor des Prinzips der Fig. 5) in den Einbaubedingungen der Fig. 6 nicht einbaufähig ist. Vielmehr müsste, bei Beibehaltung des radialsymmetrischen Aufbauprinzips, der Durchmesser des Aktors signifikant verringert werden, was entweder konstruktiv bereits ausgeschlossen ist, oder aber magnetisch sehr viel höhere Leistungsdichten erfordert. Dies wiederum macht besonders hochwertige (und damit teuere) Werkstoffe etwa für die Permanentmagneteinheit 38 notwendig, so dass nicht nur eine derartige Miniaturisierung potentiell unwirtschaftlich wird, darüber hinaus entsteht zusätzlicher spezieller Logistikaufwand für besondere Bauelemente.

Zum weiteren, allerdings nachveröffentlichten, Stand der Technik wird verwiesen auf die WO 2008/155119 A der Anmelderin. Diese Druckschrift zeigt eine elektromagnetische Stellvorrichtung mit einer elektromagnetischen Aktoreneinheit, die zum Ausüben einer Stellkraft auf eine langgestreckte Stößeleinheit ansteuerbar ist, wobei die Aktoreneinheit entlang ihrer Stellrichtung in einem Gehäuse vorgesehen ist. Die Aktoreneinheit bildet an einem der Stößeleinheit zugewandten Eingriffsende eine zumindest abschnittsweise plane, axial in der Stellrichtung bewegbarer Eingriffsfläche aus, wobei eine eingriffseitige Stirnfläche der Stößeleinheit lösbar mit der Eingriffsfläche zusammenwirkt, die Stößeleinheit mit ihrer eingriffseitigen Stirnfläche auf der Eingriffsfläche der Aktoreneinheit magnetisch haftend aufsitzt und bevorzugt die Stößeleinheit im Bereich der Stirnfläche weichmagnetisch, weiter bevorzugt aus Weicheisen, ausgebildet ist. Im Hinblick auf die in der vorliegenden Anmeldung offenbarte Erfindung ist dieser Stand der Technik als Stand der Technik gemäß Artikel 54 (3) EPÜ anzusehen.

Aufgabe der vorliegenden Erfindung ist es daher, eine gattungsgemäß elektromagnetische Stellvorrichtung im Hinblick auf einfache Herstellbarkeit und Flexibilität im Einsatz zu verbessern, und dabei ihre Eignung für asymmetrische Einbaubedingungen zu verbessern (wobei als "asymmetrisch" im Rahmen der vorliegenden Erfindung solche Einbaubedingungen verstanden werden sollen, welche, bezogen auf eine Bewegungsrichtung der Stößeleinheit, nicht radialsymmetrisch sind).

Die Aufgabe ist es, eine neue Verwendung zu schaffen für eine elektromagnetische Stellvorrichtung mit den Merkmalen des Hauptanspruchs.

In erfindungsgemäß vorteilhafter Weise erreicht die vorliegende Erfindung eine Überwindung der mechanisch starren, unlösbaren und radialsymmetrischen Verbindung zwischen Stößeleinheit (genauer: Stößelabschnitt) und Ankereinheit. Gemäß der Erfindung wird dies ersetzt durch eine Aktoreneinheit, auf welcher magnetisch haftend und lösbar die Stößeleinheit als separates Bauelement aufsitzt. Damit ist die Möglichkeit gegeben, dass, wie gemäß bevorzugter Ausführungsbeispiele vorgesehen, diese Stößeleinheit auch exzentrisch (oder ggf. gar lediglich mit ihrer Stirnfläche teilweise überlappend) auf der Eingriffsfläche der Aktoreneinheit aufsitzt, mit anderen Worten, in der Lage ist, selbst mit der Aktoreneinheit eine asymmetrische, damit nicht-radialsymmetrische Anordnung zu bilden und sich so an geeignete Bauräume anzupassen.

Dabei ist typischerweise die Aktoreneinheit selbst wiederum mittels einer Ankereinheit realisiert, welche in ansonsten bekannter Art Permanentmagnetmittel aufweist, welche mit einer stationären Kerneinheit zusammenwirken und als Reaktion auf die Bestromung einer stationären Spuleneinheit bewegt werden kann.

Zur Optimierung der Flussleitung und/oder zum Erreichen einer besonders günstigen bauformmäßigen Anpassung an einen geeigneten Bauraum hat es sich zudem als vorteilhaft erwiesen, die Spuleneinheit mit einer zumindest abschnittsweise zylindrischen oder hohlzylindrischen, magnetisch flussleitenden Aktormanteleinheit als Gehäuse zu umgeben, dessen eines Ende in axialer Richtung zum Freilegen der Eingriffsfläche geöffnet ist.

Diese Aktorenmanteleinheit kann mantelseitig nun nicht vollständig geschlossen sein, vielmehr auch lediglich bügelförmig (d.h. im Längsschnitt U-förmig), oder gar L-förmig mit lediglich einem freien Schenkel ausgestaltet sein.

Weiterbildungsgemäß vorteilhaft liegt es zudem im Rahmen der Erfindung, die scheibenförmig auszubildenden Permanentmagnetmittel radial verbreitert gegenüber einem langgestreckten, innerhalb der Kerneinheit geführten Ankerstößelabschnitts des Ankers auszugestalten, um insoweit die magnetischen Eigenschaften zu verbessern. Auch die Kerneinheit ist gemäß bevorzugter Weiterbildungen der Erfindung geeignet an einen jeweiligen Einsatzzweck anzupassen und etwa mittels eines einen Fluid-Druckausgleich ermöglichenden Durchgangs dynamisch zu verbessern.

In für den Magnetfluss vorteilhafter Weise ist die Stößeleinheit eingriffsseitig, d.h. im Bereich ihrer eingriffsseitigen Stirnfläche und zum Zusammenwirken mit der Eingriffsfläche, weichmagnetisch (insbesondere durch Realisierung aus Weicheisen in diesem Bereich) so ausgestaltet, dass ein problemloses magnetisches Haften an der Aktoreneinheit bzw. deren Eingriffsfläche erfolgt.

Die vorliegende Erfindung ermöglicht es somit, sich in sehr flexibler Weise an asymmetrische Einbaubedingungen anzupassen. Entsprechend eignet sich die elektromagnetische Stellvorrichtung der vorliegenden Erfindung in besonders günstiger Weise für verschiedenste Verwendungen in asymmetrischen Einbauräumen, wie sie häufig an Verbrennungsmotoren zum Durchführen verschiedenster Stellfunktionen, etwa eine Nockenwellenverstellung, auftreten.

Gemäß einer weiteren bevorzugten Ausführungsform der Erfindung ist es zudem ermöglicht, nicht lediglich nur eine Stößeleinheit auf der Eingriffsfläche der Aktoreneinheit durch diese antreibbar vorzusehen, vielmehr ist es auch erfindungsgemäß möglich, mehrere Stößel auf einer gemeinsamen Eingriffsfläche zu positionieren. Dies ist bislang bei aus dem Stand der Technik bekannten Technologien höchst problematisch, denn das Positionieren zweier Stößel in zwei Bohrungen für eine Serienproduktion verlangte bei feststehenden Stößeln sehr exakte Toleranzen, die gerade in einem thermisch sensitiven Kfz-Umfeld nur selten realisierbar waren. Die vorliegende Erfindung gestattet jedoch durch das mechanische Haften einen Toleranzausgleich, so dass gerade eine Lösung, bei welcher durch einen gemeinsamen Hub einer Aktoreneinheit zwei (oder mehr) Stößel anzutreiben sind, deutlich vereinfacht ist.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: einen schematischen Längsschnitt durch die elektromagnetische Stellvorrichtung gemäß einer ersten bevorzugten Ausführungsform der vorliegenden Erfindung
- Fig. 2:: eine Perspektivansicht zum Verdeutlichen einer asymmetrischen Anordnung einer Stößeleinheit auf der Eingriffsfläche einer Aktoreneinheit mit bügelförmiger Aktormanteleinheit gemäß einer zweiten Ausführungsform der Erfindung;
- Fig. 3:: eine Darstellung analog Fig. 2 mit hier radialsymmetrisch lösbar aufgesetzter Stößeleinheit und
- Fig. 4:: eine Ansicht analog Fig. 2, Fig. 3 mit einem Paar von gemeinsam auf einer Eingriffsfläche aufgesetzter Stößeleinheiten.

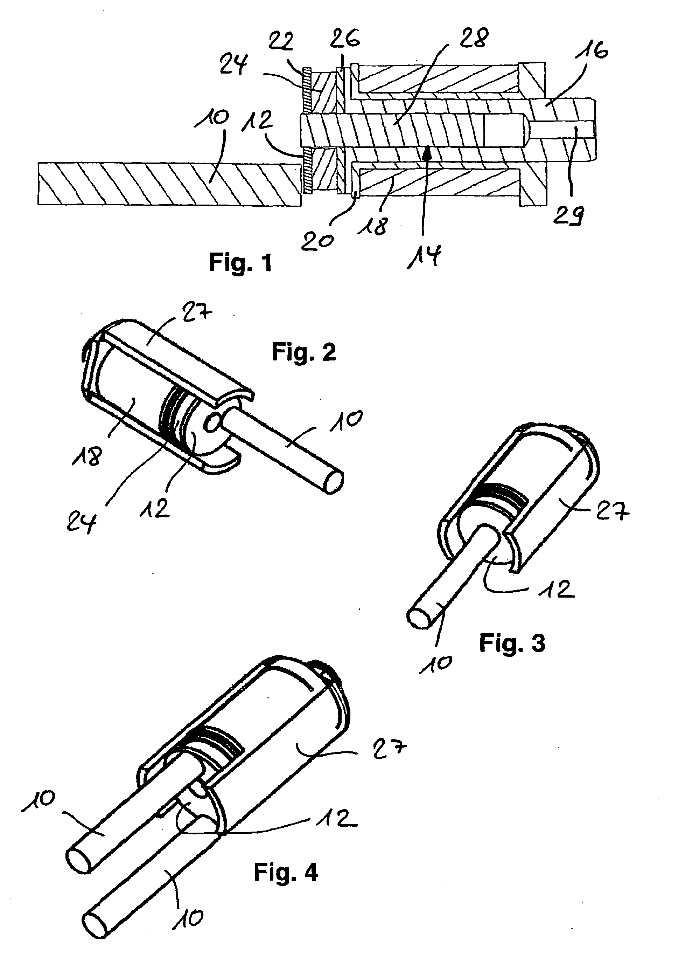

Die Fig. 1 zeigt in der schematischen Längsschnittansicht, wie eine Stößeleinheit 10 mit einem Weicheisenabschnitt magnetisch haftend und lösbar auf einer Eingriffsfläche 12 einer Ankereinheit 14 aufsitzt, welche wiederum axial bewegbar in einer stationären Kerneinheit 16 und bewegbar relativ zu dieser als Reaktion auf die Bestromung einer Spule 18 (welche wiederum gehalten auf einem Spulenträger 20 ist) geführt ist. Die Ankereinheit 14 weist eingriffsseitig eine scheibenartige Anordnung bestehend aus einer vorderen Ankerscheibe 22, einer Permanentmagneteinheit 24 und einer kernseitigen Ankerscheibe 26 auf und wird fortgesetzt von einem Ankerstößelabschnitt 28, der sich in der gezeigten Weise in einem hohlzylindrischen Innenraum der Kerneinheit 16 bewegen kann. Die Scheibenanordnung 22, 24, 26 ist beispielsweise durch Verschweißen der Scheiben 22, 26 aus magnetisch leitendem Stahl mit dem Ende des Stößels 28 fest und unlösbar mit diesem verbunden. Rückseits ist die Kerneinheit 16 mittels einer Bohrung 29 geöffnet.

Die Stößeleinheit 10 haftet durch ihre Magnetwirkung voll- oder teilflächig relativ zur Eingriffsfläche 12, konzentrisch zur Längsachse (Fig. 3) oder exzentrisch (Fig. 2), so dass eine beliebige Anpassbarkeit an jeweilige Einbaubedingungen und Einbauräume gegeben ist. Es ist offensichtlich, dass eine Konfiguration der in Fig. 1 gezeigten Art unproblematisch und unter Maximierung des zur Verfügung stehenden Bauraums für die gezeigte Elektromagneteinheit problemlos in die Vorgabe der Fig. 6 eingepasst werden kann.

Auch ermöglicht es diese konstruktive Realisierung im Rahmen der Erfindung, wie in Fig. 4 gezeigt, zwei (oder mehr) Stößeleinheiten 10 auf dieselbe Eingriffsfläche 12 aufzusetzen und so etwa, wie in Fig. 4 gezeigt, in paralleler Richtung zueinander gemeinsam anzutreiben. Dabei wird besonders wirksam das aus dem Stand der Technik bekannte Toleranzprobleme von zwei Stößeln, die in zwei Bohrungen zu führen sind, gelöst, denn durch die magnetische Haftung zwischen den jeweiligen Stößeleinheiten und der Ankereinheit ist für einen einfachen Toleranzausgleich gesorgt.

Die Stößeleinheit 10 gemäß bevorzugter Weiterbildungen der Erfindung ist magnetisch so realisiert, dass diese in Richtung auf die Ankereinheit und zum haftenden Zusammenwirken mit der Permanentmagneteinheit 24 auf der Eingriffsfläche 12 einen weichmagnetischen Abschnitt aufweist, bevorzugt aus Weicheisen realisiert ist. In Richtung auf einen entgegengesetzt gegenüberliegenden Stellpartner (nicht gezeigt) der Stößeleinheit ist diese dagegen hart und verschleißfest ausgebildet, um insoweit in einem Dauerbetrieb etwa zur Nockenwellenverstellung lange Standzeiten zu erreichen. Beide Abschnitte lassen sich durch geeignete Materialbeeinflussungen ausgestalten (etwa das Härten einen Weicheisen-Stößelkörpers zum Ausbilden des verschleißfesten Abschnitts), alternativ durch das unlösbare Zusammenfügen zweier verschiedener (z.B. Metall-) Materialien durch Schweißen oder dergleichen Vorgang.

## Patentansprüche

1. Verwendung einer elektromagnetischen Stellvorrichtung, wobei die Stellvorrichtung eine elektromagnetische Aktoreneinheit sowie eine langgestreckte Stößeleinheit zur Nockenwellenverstellung aufweist,
die elektromagnetische Aktoreneinheit zum Ausüben einer Stellkraft auf die langgestreckte Stößeleinheit ansteuerbar ist,
die Aktoreneinheit an einem der Stößeleinheit zugewandten Eingriffsende eine zumindest abschnittsweise plane, axial in der Stellrichtung bewegbare Eingriffsfläche ausbildet,
eine eingriffsseitige Stirnfläche der Stößeleinheit lösbar mit der Eingriffsfläche zusammenwirkt,
die Stößeleinheit mit ihrer eingriffsseitigen Stirnfläche auf der Eingriffsfläche der Aktoreneinheit exzentrisch und magnetisch haftend aufsitzt,
und wobei die Stellvorrichtung in einenasymmetrischen Einbauraum an einem Verbrennungsmotor eingebaut wird.

2. Verwendung nach Anspruch 1, wobei die Stößeleinheit (10) exzentrisch und/oder mit lediglich einer Teilfläche auf der Eingriffsfläche (12) aufsitzt.

3. Verwendung nach Anspruch 1 oder 2, wobei die Aktoreneinheit eine Permanentmagnetmittel (24) aufweisende, endseitig die Eingriffsfläche (12) ausbildende Ankereinheit (14) aufweist, die durch Bestromung einer stationären Spuleneinheit (18) bewegbar ist.

4. Verwendung nach Anspruch 3, wobei die Spuleneinheit von einer zumindest abschnittsweise zylindrischen oder hohlzylindrischen, magnetisch flussleitenden Aktormanteleinheit (27) so umgeben ist, dass die Eingriffsfläche in einem offenen Ende der Aktormanteleinheit bewegbar ist.

5. Verwendung nach Anspruch 4, wobei die Aktormanteleinheit (27) L- oder bügelförmig so ausgebildet ist, dass ein freier Schenkel der Aktormanteleinheit eine hohlzylinderabschnittsförmige Umfangsbegrenzung der Ankereinheit sowie der Spuleneinheit bildet.

6. Verwendung nach einem der Ansprüche 3 bis 5, wobei die Ankereinheit (14) einen die Permanentmagnetmittel (24) aufweisenden verbreiterten Ankerabschnitt (22, 24, 26) axial außerhalb der Spuleneinheit sowie einen daran ansitzenden langgestreckten Ankerstößelabschnitt (28) aufweist, der zumindest abschnittsweise in einer langgestreckten, von der Spuleneinheit umschlossenen Kerneinheit (16) der Aktoreneinheit geführt ist.

7. Verwendung nach Anspruch 6, wobei die Kerneinheit (16) aus magnetischem Material realisiert ist und/oder einen einen Fluid-Druckausgleich ermöglichenden Durchgang (29), insbesondere Durchgangsbohrung, aufweist.

8. Verwendung nach einem der Ansprüche 3 bis 7, wobei die Ankereinheit (14) gegen die Kraft einer bevorzugt axial vorgesehenen Feder, insbesondere einer gegen den Ankerstößelabschnitt wirkenden und/oder in dem Durchgang vorgesehenen Druckfeder, geführt ist.

9. Verwendung nach einem der Ansprüche 1 bis 8, wobei die einstückig-stiftförmige, aus einem Metallmaterial realisierte Stößeleinheit (10) entlang ihrer Längsachse zwei Abschnitte aufweist, von denen ein erster Abschnitt zum magnetisch haftenden Zusammenwirken mit Permanentmagnetmitteln (24) der Aktoreneinheit (14) weichmagnetisch ist und ein zweiter, zum Zusammenwirken mit einem Stellpartner ausgebildeter Abschnitt gehärtet und/oder verschleißfest ausgebildet ist.

10. Verwendung nach einem der Ansprüche 1 bis 9, wobei eine Mehrzahl von Stößeleinheiten lösbar mit einer gemeinsamen Eingriffsfläche zusammenwirkt.

11. Verwendung nach Anspruch 10, wobei mindestens zwei der Stößeleinheiten zueinander parallel verlaufend geführt sind.

12. Verwendung nach Anspruch 10 oder 11, wobei zumindest zwei der Stößeleinheiten zueinander windschief verlaufend geführt sind.

## Claims

1. An application of an electromagnetic actuation device, wherein the actuation device has an electromagnetic actuator unit and an elongated plunger unit for purposes of camshaft adjustment,
the electromagnetic actuator unit can be controlled so as to exert an actuation force onto the elongated plunger unit,
on an engagement end facing towards the plunger unit the actuator unit forms an engagement surface, planar on at least some sections, that can be moved axially in the actuation direction,
an engagement-side end face of the plunger unit interacts with, and can be detached from, the engagement surface,
the plunger unit with its engagement-side end face rests eccentrically on, and magnetically adheres to, the engagement surface of the actuator unit,
and wherein the actuation device is installed into an asymmetric installation space on an internal combustion engine.

2. The application in accordance with Claim 1, wherein the plunger unit (10) rests eccentrically and/or with just part of its surface on the engagement surface (12).

3. The application in accordance with Claim 1 or 2, wherein the actuator unit has an armature unit (14) having a permanent magnet agent (24) and forming on its end side the engagement surface (12); the armature unit can be moved by the excitation of a stationary coil unit (18).

4. The application in accordance with Claim 3, wherein the coil unit is surrounded on at least some sections by a cylindrical, or hollow cylindrical, magnetically flux conducting actuator sleeve unit (27), such that the engagement surface can be moved in an open end of the actuator sleeve unit.

5. The application in accordance with Claim 4, wherein the actuator sleeve unit (27) is designed in an L-shaped or bow-shaped manner such that a free arm of the actuator sleeve unit forms a hollow cylindrical section-shaped peripheral boundary of the actuator unit and the coil unit.

6. The application in accordance with one of the Claims 3 to 5, wherein the armature unit (14) has a widened armature section (22, 24, 26), axially outside the coil unit, having the permanent magnet agent (24), and an elongated armature plunger section (28) sitting on the armature section, which on at least some sections is guided in an elongated core unit (16) of the actuator unit, enclosed by the coil unit.

7. The application in accordance with Claim 6, wherein the core unit (16) is implemented in a magnetic material and/or has a through-passage (29), in particular a through-passage bore, enabling an equalisation of fluid pressure.

8. The application in accordance with one of the Claims 3 to 7, wherein the armature unit (14) is guided against the force of a preferably axially fitted spring, in particular a compression spring acting on the armature plunger section and/or fitted in the through-passage.

9. The application in accordance with one of the Claims 1 to 8, wherein the single piece, pin-shaped plunger unit (10), implemented in a metallic material, has two sections along its longitudinal axis, of which a first section is weakly magnetic so as to interact in a magnetically adhering manner with a permanent magnet agent (24) of the actuator unit (14), and a second is designed in a hardened and/or wear-resistant manner so as to interact with a section designed as an actuation partner.

10. The application in accordance with one of the Claims 1 to 9, wherein a multiplicity of plunger units interacts with, and can be detached from, a common engagement surface.

11. The application in accordance with Claim 10, wherein at least two of the plunger units are guided such that they run parallel to one another.

12. The application in accordance with Claim 10 or 11, wherein at least two of the plunger units are guided such that they run askew to one another.

## Revendications

1. Utilisation d'un dispositif de réglage électromagnétique, le dispositif de réglage présentant une unité d'actionneur électromagnétique ainsi qu'une unité de poussoir allongée pour le réglage d'un arbre à cames, l'unité d'actionneur électromagnétique pouvant être commandée pour exercer une force de réglage sur l'unité de poussoir allongée,
l'unité d'actionneur, au niveau d'une extrémité d'engagement tournée vers l'unité de poussoir, constituant une surface d'engagement au moins en partie plane, déplaçable axialement dans la direction de réglage,
une surface frontale du côté de l'engagement de l'unité de poussoir coopérant de manière libérable avec la surface d'engagement,
l'unité de poussoir, avec sa surface frontale du côté de l'engagement, reposant en adhérant magnétiquement et de manière excentrique sur la surface d'engagement de l'unité d'actionneur,
et le dispositif de réglage étant incorporé dans un espace d'installation asymétrique au niveau d'un moteur à combustion interne.

2. Utilisation selon la revendication 1, dans laquelle l'unité de poussoir (10) repose de manière excentrique et/ou avec seulement une surface partielle sur la surface d'engagement (12).

3. Utilisation selon la revendication 1 ou 2, dans laquelle l'unité d'actionneur présente une unité d'armature (14) présentant des moyens d'aimants permanents (24), constituant du côté de l'extrémité la surface d'engagement (12), laquelle peut être déplacée par alimentation électrique d'une unité de bobine stationnaire (18).

4. Utilisation selon la revendication 3, dans laquelle l'unité de bobine est entourée par une unité d'enveloppe d'actionneur (27) conduisant le flux magnétique, au moins en partie cylindrique ou cylindrique creuse, de telle sorte que la surface d'engagement puisse être déplacée dans une extrémité ouverte de l'unité d'enveloppe d'actionneur.

5. Utilisation selon la revendication 4, dans laquelle l'unité d'enveloppe d'actionneur (27) est réalisée en forme de L ou d'étrier, de telle sorte qu'une branche libre de l'unité d'enveloppe d'actionneur forme une limitation périphérique en forme de portion cylindrique creuse de l'unité d'armature ainsi que de l'unité de bobine.

6. Utilisation selon l'une quelconque des revendications 3 à 5, dans laquelle l'unité d'armature (14) présente une portion d'armature (22, 24, 26) élargie présentant les moyens d'aimants permanents (24) axialement à l'extérieur de l'unité de bobine ainsi qu'une portion de poussoir d'armature (28) allongée reposant sur celle-ci, laquelle est guidée au moins en partie dans une unité de noyau allongée (16) de l'unité d'actionneur, entourée par l'unité de bobine.

7. Utilisation selon la revendication 6, dans laquelle l'unité de noyau (16) est réalisée en matériau magnétique et/ou présente un passage (29), en particulier un alésage de passage, permettant un équilibrage de pression fluidique.

8. Utilisation selon l'une quelconque des revendications 3 à 7, dans laquelle l'unité d'armature (14) est guidée à l'encontre de la force d'un ressort de préférence prévu axialement, en particulier d'un ressort de compression agissant à l'encontre de la portion de poussoir d'armature et/ou prévu dans le passage.

9. Utilisation selon l'une quelconque des revendications 1 à 8, dans laquelle l'unité de poussoir (10) en forme de goupille d'une seule pièce, réalisée en matériau métallique, présente, le long de son axe longitudinal, deux portions dont une première portion destinée à coopérer par adhérence magnétique avec les moyens d'aimants permanents (24) de l'unité d'actionneur (14) est en matériau magnétique doux et dont une deuxième portion réalisée pour coopérer avec un partenaire de réglage est réalisée sous forme durcie et/ou résistant à l'usure.

10. Utilisation selon l'une quelconque des revendications 1 à 9, dans laquelle une pluralité d'unités de poussoir coopère de manière libérable avec une surface d'engagement commune.

11. Utilisation selon la revendication 10, dans laquelle au moins deux des unités de poussoir sont guidées de manière à s'étendre parallèlement l'une à l'autre.

12. Utilisation selon la revendication 10 ou 11, dans laquelle au moins deux des unités de poussoir sont guidées de manière à s'étendre en biais l'une par rapport à l'autre.
